(19) Europäisches Patentamt
European Patent Office
Office européen des brevets

(11) **EP 3 800 693 B1**

(12) **FASCICULE DE BREVET EUROPEEN**

(45) Date de publication et mention
de la délivrance du brevet:
**06.12.2023 Bulletin 2023/49**

(21) Numéro de dépôt: **19306278.3**

(22) Date de dépôt: **03.10.2019**

(51) Classification Internationale des Brevets (IPC):
**B66F 9/075** (2006.01)     **H01M 10/42** (2006.01)
**H01M 50/20** (2021.01)

(52) Classification Coopérative des Brevets (CPC):
**H01M 10/4207; B66F 9/07536; H01M 50/20;**
Y02E 60/10

(54) **DISPOSITIF DE RÉCEPTION D'UNE BATTERIE DE CHARIOT ÉLÉVATEUR**

BATTERIEAUFNAHMEVORRICHTUNG EINES GABELSTAPLERS

DEVICE FOR RECEIVING A FORKLIFT TRUCK BATTERY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(43) Date de publication de la demande:
**07.04.2021 Bulletin 2021/14**

(73) Titulaire: **Toyota Material Handling France
77607 Marne la Vallee Cedex 3 (FR)**

(72) Inventeurs:
• **CALLEJON, André
13880 Velaux (FR)**

• **HOAREAU, David
13880 Velaux (FR)**

(74) Mandataire: **Casalonga
Casalonga & Partners
Bayerstraße 71/73
80335 München (DE)**

(56) Documents cités:
**FR-A1- 2 685 547     JP-A- 2003 095 591
JP-A- 2014 073 885     KR-B1- 101 078 580
US-A1- 2017 112 014**

**Description**

La présente invention concerne un dispositif de réception d'une batterie électrique de chariot élévateur destinée à équiper un ensemble de recharge d'une telle batterie.

De manière classique, des chariots élévateurs sont équipés d'actionneurs électriques alimentés en énergie électrique par une batterie électrique de stockage amovible. Par exemple, la batterie électrique de stockage alimente en énergie électrique un moteur électrique permettant de déplacer le chariot élévateur.

Dans certains modèles de chariots élévateurs, la batterie est amovible. Dans ce cas, lorsque la batterie est déchargée, on retire la batterie déchargée du chariot élévateur, on la place au voisinage d'un dispositif de recharge électrique et on la remplace par une batterie électrique chargée. Des dispositifs capables de mouvoir des objets tels que des batteries sont décrits dans les documents JP2014073885 et KR101078580 .

Certains environnements, par exemple des sites industriels ou des plates-formes de logistique, emploient un grand nombre de chariots élévateurs. Dans de tels environnements, un chariot élévateur équipé avec une batterie déchargée est conduit dans une salle de charge. La salle de charge comprend un dispositif de réception destinée à supporter la batterie au cours de sa charge et un dispositif de permutation permettant de transporter la batterie déchargée depuis le chariot élévateur jusqu'à un dispositif de réception et de transporter une batterie chargée depuis le dispositif de réception vers le chariot élévateur.

Le dispositif de permutation comprend un logement recevant une batterie en cours de transfert et un actionneur, par exemple un électro aimant, capable d'attirer et de repousser la batterie par rapport au logement. Un dispositif de réception comprend classiquement une structure et des rouleaux pivotant par rapport à la structure et disposés selon un alignement plan. Lorsque le dispositif de permutation fournit une batterie déchargée au dispositif de réception, l'actionneur repousse la batterie déchargée qui se déplace en translation sur les rouleaux. Les rouleaux continuent de supporter la batterie au cours de sa charge. Lorsque la batterie est rechargée et que le dispositif de permutation vient récupérer la batterie, l'actionneur attire la batterie vers le logement de sorte que celle-ci se déplace en translation sur les rouleaux pivotants. Une paroi disposée derrière l'alignement de rouleaux empêche la batterie de continuer à se déplacer sur les rouleaux et de quitter le dispositif de réception.

Toutefois, lorsqu'une batterie de relativement courtes dimensions est fournie au dispositif de réception, la batterie peut continuer à se déplacer jusqu'à venir en contact avec la paroi. Dans ces conditions, lorsque la batterie est rechargée et que le dispositif de permutation vient récupérer la batterie, celle-ci est trop éloignée de l'actionneur pour être attirée vers le dispositif de permutation.

L'invention a pour but de pallier aux inconvénients précités,

Un dispositif selon l'invention est défini dans les revendications en annexe.

Plus particulièrement, l'invention vise à fournir un dispositif de réception de batterie de chariot élévateur permettant de manipuler facilement des batteries présentant des dimensions variées entre le dispositif de réception et un dispositif de permutation.

A cet effet, il est proposé un dispositif de réception d'une batterie de chariot élévateur comprenant une structure, une pluralité de rouleaux pivotant par rapport à la structure autour d'axes appartenant à un même plan de référence et parallèles à une direction axiale, le dispositif comprenant une paroi de fond.

Selon une caractéristique générale de ce dispositif, la paroi de fond est apte à se déplacer par rapport à la structure selon un mouvement de translation.

La paroi de fond constitue une butée du déplacement d'une batterie de chariot élévateur lorsque cette batterie doit être rechargée. En prévoyant une paroi de fond pouvant ainsi être déplacée, on peut utiliser un même dispositif de réception pour différentes tailles de batteries.

Avantageusement, le mouvement de translation de la paroi de fond par rapport à la structure est selon une direction contenue dans le plan de référence.

Selon un autre mode de réalisation, le mouvement de translation de la paroi de fond par rapport à la structure est selon une direction perpendiculaire à la direction axiale.

On peut en outre prévoir une première platine perpendiculaire à la direction axiale, la première platine comprenant une première portion crantée, la paroi de butée comprenant une poutre.

Avec un tel agencement, il suffit de déplacer la poutre pour régler la position de la butée et de l'insérer dans les crans de la portion crantée pour verrouiller son déplacement, une fois le réglage effectué.

Avantageusement, la poutre présente une section longitudinale rectangulaire.

Une telle section longitudinale fournit une butée plus efficace en permettant un meilleur appui plan entre la poutre et une surface plane verticale de la batterie de chariot élévateur.

On peut également prévoir que la poutre présente une section longitudinale carrée.

Une section carrée permet de limiter l'encombrement occasionné par la présence de la paroi de fond tout en s'assurant que la paroi de fond est suffisamment solide.

De préférence, la première portion crantée comprend entre quatre (4) et huit (8) crans.

Un nombre de crans compris dans cette plage permet un nombre de réglages différents de la position de la paroi de fond approprié à un dispositif de réception d'une batterie de chariot élévateur dans une salle de charge.

Avantageusement, la structure comprend une paroi fixe dotée d'une rainure traversante, rectiligne et perpendiculaire à la direction axiale, la rainure comprenant un bord inférieur longitudinal et un bord supérieur longitudinal, le décalage vertical du bord inférieur par rapport à la première portion crantée étant tel que le déplacement de la poutre est verrouillé par la première portion crantée lorsque la poutre est en contact avec le bord inférieur.

Avec un tel agencement, on soulève la poutre pour la sortir de la portion crantée et pour permettre son déplacement et on la relâche pour verrouiller ce déplacement une fois le réglage effectué.

On peut en outre prévoir une entretoise apte à être intercalée entre la poutre et le bord supérieur.

On peut ainsi verrouiller de manière encore plus fiable la position de la poutre une fois le réglage effectué.

Dans un mode de réalisation, le dispositif comprend une encoche rectiligne et perpendiculaire à la rainure, l'encoche étant située à l'une des extrémités de la rainure.

Une telle encoche permet de faciliter l'insertion de la poutre lors de la mise en place du dispositif de réception.

Avantageusement, la rainure comprend une encoche supplémentaire située à l'autre des extrémités de la rainure.

La mise en place du dispositif de réception est rendue encore plus facile car l'insertion de la poutre peut être faite à chaque extrémité de la rainure.

De préférence, le dispositif comprend une deuxième platine parallèle à la première platine, la deuxième platine comprenant une deuxième portion crantée en regard de la première portion crantée.

On peut de la sorte s'assurer que la poutre reste parallèle aux axes de pivotement des rouleaux de sorte à améliorer l'efficacité de la butée du déplacement d'une batterie de chariot élévateur lorsque cette batterie doit être rechargée.

Selon un mode de réalisation, la pluralité de rouleaux forme au moins un premier alignement et un deuxième alignement, la structure comprenant une troisième platine parallèle aux première et deuxième platines, la troisième platine comprenant une troisième portion crantée en regard des première et deuxième portions crantées, le premier alignement étant axialement situé entre la première platine et la deuxième platine, le deuxième alignement étant axialement situé entre la deuxième platine et la troisième platine.

Une telle disposition permet d'utiliser une même poutre pour plusieurs alignements de rouleaux tout en maintenant la solidité du verrouillage du mouvement de translation de la poutre. Dans ces conditions, la modification de la position de la poutre permet de modifier le réglage de butée de l'ensemble des logements du dispositif en une seule opération.

On peut en outre prévoir une plaque de guidage d'une batterie de chariot élévateur, la plaque de guidage étant dotée d'une portion plane inclinée par rapport au plan de référence.

Une telle plaque permet de guider une batterie destinée à être reçue par le dispositif en préservant la durée de vie de la batterie et du rouleau le plus proche de la plaque de guidage.

Avantageusement, la portion plane comprend une extrémité distale par rapport à la pluralité de rouleaux et une extrémité proximale par rapport à la pluralité de rouleaux, l'extrémité proximale étant située entre un plan d'appui et le plan de référence, le plan d'appui contenant des zones des rouleaux destinées à être en contact avec une batterie de chariot élévateur.

De préférence, la distance entre l'extrémité proximale et le plan de référence est égale au produit de la distance entre le plan de référence et le plan d'appui et d'un coefficient compris entre 0,5 et 0,9.

Une telle position de l'extrémité proximale limite les chocs au niveau du rouleau le plus proche de la plaque de guidage et permet ainsi d'allonger la durée de vie de ce rouleau et de la batterie.

Selon un mode de réalisation, la portion plane forme un angle entre 23° et 33° avec le plan de référence.

Une telle plage angulaire adoucit le choc entre la plaque de guidage et la batterie et permet ainsi d'allonger la durée de vie de la plaque et de la batterie.

D'autres buts, caractéristiques et avantages de l'invention apparaîtront la lecture de la description suivante, donnée uniquement à titre d'exemple non limitatif, et faite en référence aux dessins annexés sur lesquels :

- la figure 1 est une vue en perspective d'un dispositif de réception selon un aspect de l'invention,

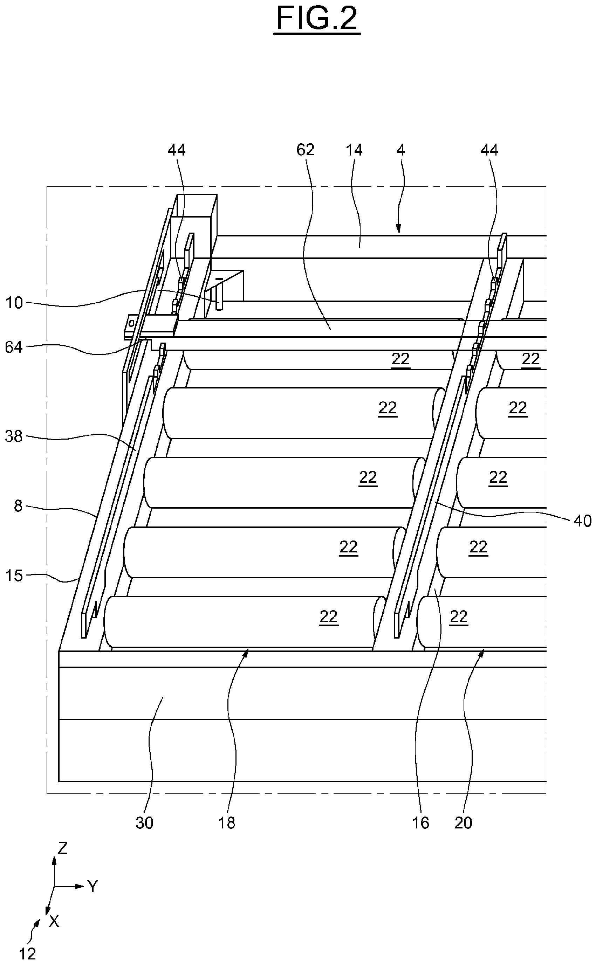

- la figure 2 est une vue en perspective du dispositif de réception de la figure 1,

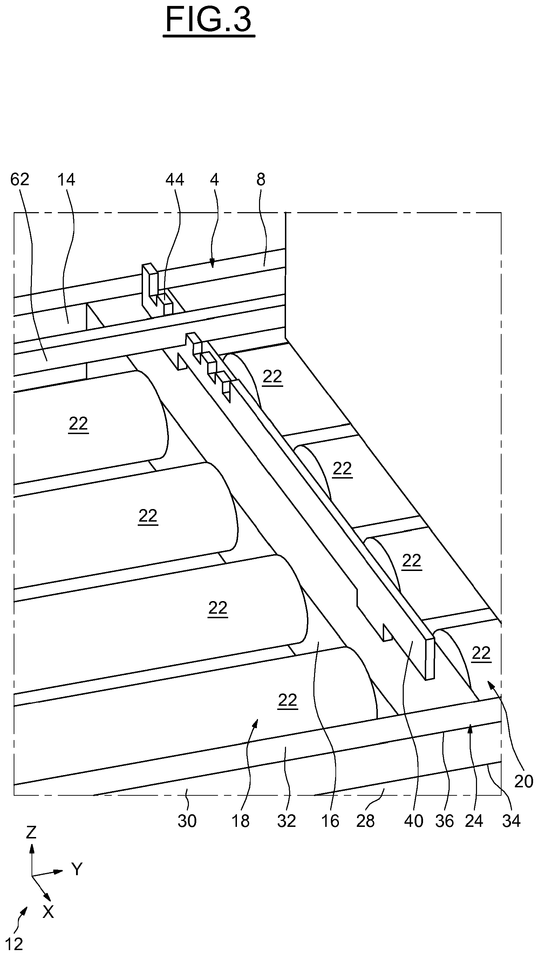

- les figures 3 et 4 sont des vues de détail du dispositif de réception des figures 1 et 2,
- la figure 5 est une vue de côté du dispositif de réception des figures 1 à 4, et
- la figure 6 est une autre vue en perspective du dispositif de réception des figures 1 à 5.

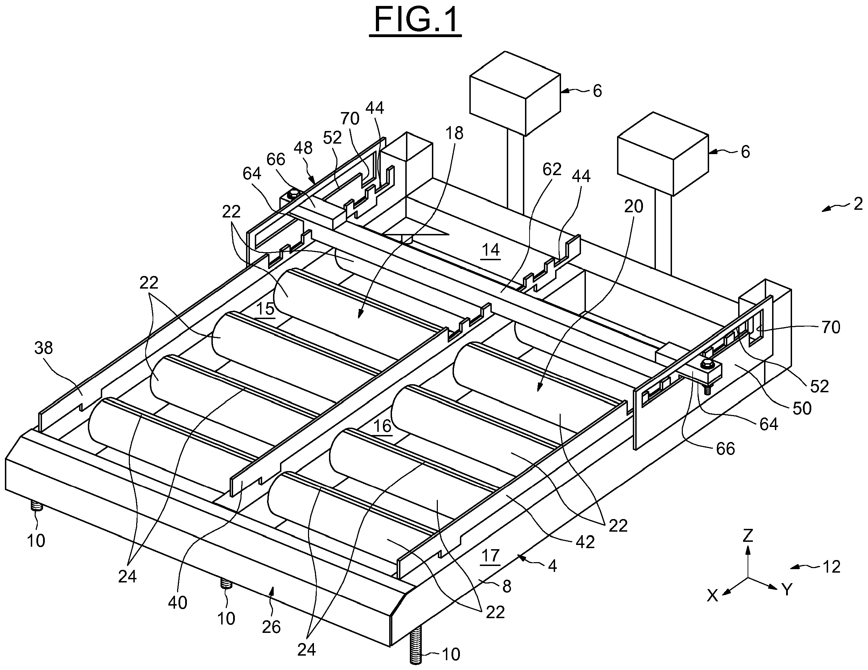

En référence à la figure 1, on a schématiquement représenté un ensemble de recharge 2. L'ensemble 2 est installé dans une salle de charge. L'ensemble 2 est destiné à recevoir des batteries électriques de chariot élévateur en vue de leur charge électrique. L'ensemble 2 est constitué d'un dispositif de réception 4 et de deux moyens de recharge électrique 6, connus en soi. Bien entendu, on ne sort pas du cadre de l'invention en envisageant un nombre différent de moyens de recharge électrique 6. Le dispositif 4 comprend une structure 8 dotée d'une pluralité de pieds 10.

On définit une base vectorielle orthonormale 12 attachée à la structure 8. La base 12 est constituée par un vecteur X, un vecteur Y et un vecteur Z.

Sauf lorsqu'il en sera indiqué autrement, les termes « supérieur », « inférieur », « haut », « bas », « horizontal » et « vertical » et l'expression « au-dessus » seront compris comme se rapportant à la structure 8 lorsque les pieds 10 reposent normalement sur une surface plane horizontale, c'est-à-dire en supposant le vecteur Z orienté verticalement vers le haut.

La structure 8 comporte deux poutres transversales 13 et 14 rectilignes et dirigées par le vecteur Y. Seule la poutre 14 est visible sur les figures. La poutre 13 est destinée à être adjacente au dispositif de permutation lorsqu'une batterie est fournie au dispositif 4 pour être chargée ou lorsqu'une batterie est récupérée après avoir été chargée. La structure 8 comporte trois poutres longitudinales 15, 16 et 17 rectilignes dirigées par le vecteur X. Les poutres transversales 13 et 14 sont reliées entre elles par les poutres longitudinales 15, 16 et 17.

Le dispositif 4 comporte deux alignements 18 et 20. Selon la direction et le sens du vecteur Y, la poutre 15, l'alignement 18, la poutre 16, l'alignement 20 et la poutre 17 se succèdent dans cet ordre. Chaque alignement 18, 20 est constituée par une pluralité de rouleaux 22 se succédant selon la direction du vecteur X. Les rouleaux 22 sont cylindriques à section axiale circulaire. Le diamètre de la section axiale circulaire est le même pour tous les rouleaux 22. Les axes (non représentés) des sections axiales circulaires des rouleaux 22 sont parallèles au vecteur Y et sont contenus dans un même plan perpendiculaire au vecteur Z.

Dans la présente demande, sauf lorsqu'il en est indiqué autrement, l'expression « surface cylindrique » désigne une surface engendrée par un ensemble de droites parallèles s'appuyant sur une courbe plane fermée. Sauf indication contraire, le terme « axial » se rapporte aux axes de révolution des rouleaux 22.

De la sorte, les rouleaux 22 peuvent supporter un objet tel qu'une batterie de chariot élévateur. Le contact entre les rouleaux 22 et une face inférieure de la batterie se fait au niveau des zones 24 qui correspondent aux extrémités supérieures des rouleaux 22. Dans la présente demande, sauf lorsqu'il en sera indiqué autrement, l'expression « plan de référence » désigne le plan contenant les axes de révolution des sections axiales circulaires des rouleaux 22 et l'expression « plan d'appui » désigne le plan contenant les zones 24 des rouleaux 22. En d'autres termes, le plan d'appui est un plan horizontal décalé, par rapport au plan de préférence, verticalement vers le haut de la valeur du rayon de la section axiale circulaire des rouleaux 22.

Le dispositif 4 comporte une plaque de guidage 26. La plaque 26 est fixée à la poutre 13. La plaque 26 comporte une portion plane verticale 28, une portion plane oblique 30 et une portion plane horizontale 32. La plaque 26 comporte une arrête inférieure 34 délimitant les portions 28 et 30 et une arête supérieure 36 délimitant les portions 30 et 32. L'arrête 36 est relativement plus proche de l'alignement 18 de rouleaux 22 que l'arrête 34.

Dans l'exemple illustré, la portion 30 forme un angle α compris entre 20 ° et 30 ° avec le plan de référence :

$$20° \leq \alpha \leq 30°$$

L'arête 36 est verticalement située entre le plan de référence et le plan d'appui. Plus précisément, la distance $d_{ref\text{-}36}$ entre le plan de référence et l'arête 36 égale la distance $d_{ref\text{-}appui}$ entre le plan de référence et le plan d'appui multiplié par un coefficient compris entre 0,5 et 0,9 :

$$d_{ref-appui} * 0{,}5 \leq d_{ref-36} \leq d_{ref-appui} * 0{,}9$$

En référence à la figure 1, la structure 8 comprend trois platines 38, 40 et 42 respectivement fixées aux poutres 15, 16 et 17. Les platines 38, 40 et 42 sont planes et perpendiculaires au vecteur Y. Les platines 38, 40 et 42 sont de forme oblongue et leur direction longitudinale est parallèle au vecteur X.

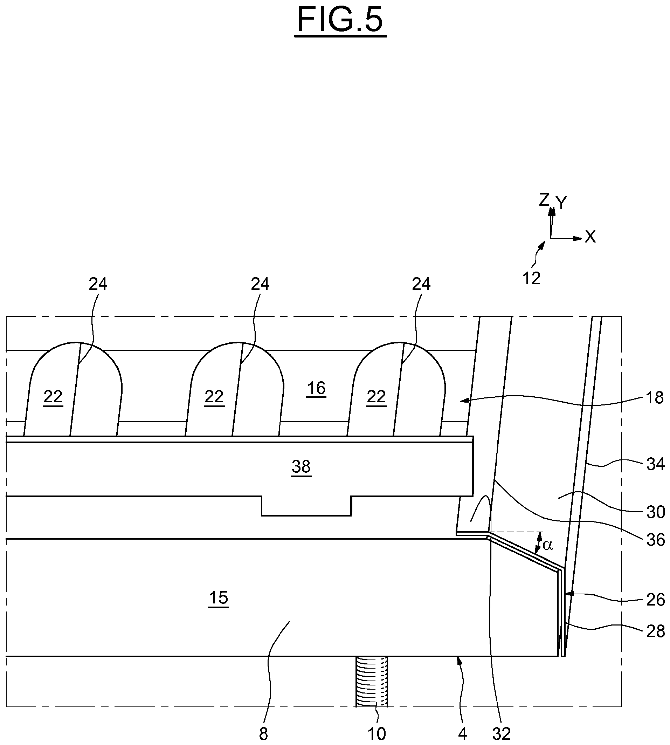

Chaque platine 38, 40 et 42 comprend une portion crantée 44. Les portions crantées 44 sont pratiquées sur un bord supérieur des platines 38, 41 42. Les portions crantées 44 des platines 38, 40 et 42 sont en regard les unes des autres. Les portions crantées 44 sont identiques pour les platines 38, 40 et 42. De ce fait, seule la portion crantée 44 de la platine 40 est représentée sur la figure 5.

La portion crantée 44 est située au voisinage de la poutre transversale 14. Dans l'exemple illustré, la portion crantée 44 est une portion crénelée. La portion crantée 44 comprend une pluralité de crans 46, en l'espèce des créneaux 46. Les crans 46 sont identiques les uns aux autres et se succèdent selon la direction du vecteur X. Chaque cran 46 présente une section axiale carrée de côté $c_{46}$. De préférence, la portion crantée 44 comporte entre quatre crans 26 et huit crans 26.

La structure 8 comprend deux parois fixes 48 et 50 respectivement fixées aux poutres 15 et 17. Les parois 48 et 50 sont disposées au voisinage de la poutre 14. De ce fait, les parois 48 et 50 sont disposées en regard, par rapport à la direction du vecteur Y, des portions crantées 44 des platines 38, 40 et 42.

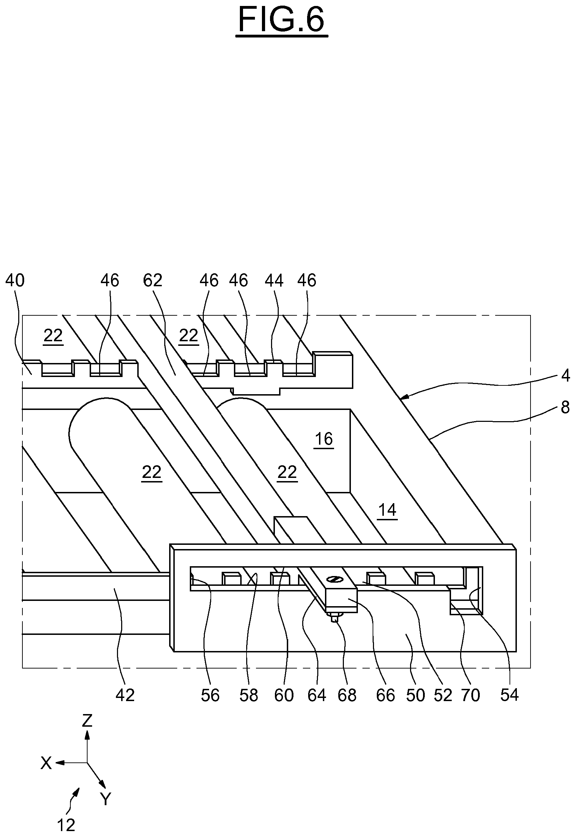

Chaque paroi 48 et 50 comporte une rainure 52. Les rainures 52 traversent les parois 48 et 50 selon la direction du vecteur Y. Les rainures 52 sont identiques pour les parois 48 et 50. De ce fait, seule la rainure 52 de la paroi 50 va être décrite en référence à la figure 6.

La rainure 52 est longitudinalement délimitée par une extrémité 54 adjacente à la poutre 14 et une extrémité 56 opposée à la poutre 14. La rainure 52 est verticalement délimitée par un bord inférieur 58 et un bord supérieur 60. Les extrémités 54 et 56 forment des plans perpendiculaires au vecteur X et les bords 58 et 60 forment des plans perpendiculaire ay vecteur Z. Le décalage $d_{58z}$ vertical entre le bord 58 et le bord supérieur des platines 38, 40 et 42 est sensiblement nul. Autrement dit, le bord 58 est situé verticalement au même niveau que le sommet supérieur des créneaux 46 de la portion crantée 44.

Le dispositif 4 comporte une poutre 62. La poutre 62 présente une section axiale carrée de côté $c_{62}$ légèrement inférieur à la longueur $c_{46}$. La poutre 62 comprend, au niveau de ses deux extrémités, deux languettes 64. La longueur $l_{62}$ de la poutre 62 est telle que, lorsque la poutre 62 est orientée parallèlement au vecteur Y, elle peut être intercalée entre les parois 48 et 50, les languettes 64 étant reçues dans les rainures 52. Comme le décalage $d_{58z}$ est sensiblement nul, le déplacement de la poutre 62 est verrouillé par la portion crantée 44 lorsque la poutre 62 est en contact avec le bord 58.

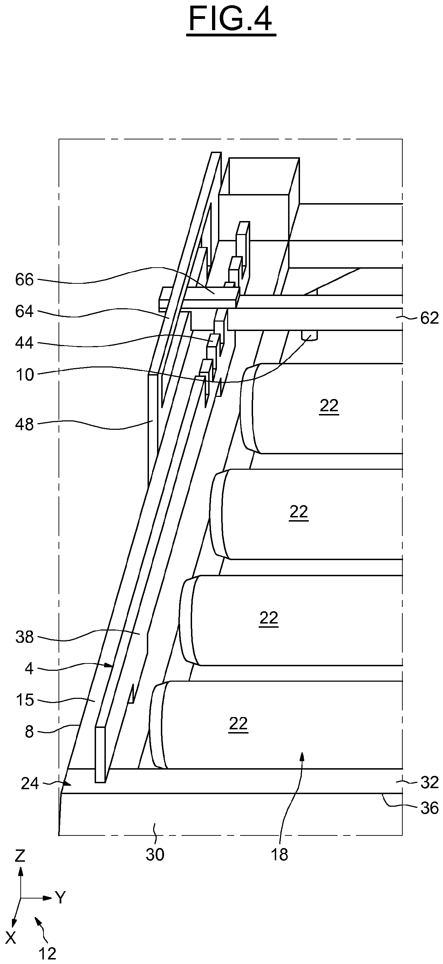

Le dispositif 4 comporte deux entretoises 66 visibles sur les figures 4 et 6. Les entretoises 66 forment des parallélépipèdes rectangles pouvant être intercalés au-dessus des languettes 64. L'épaisseur $e_{52z}$ selon la direction du vecteur Z de la rainure 52 est légèrement supérieure à la somme de l'épaisseur $e_{64z}$ selon la direction du vecteur Z de la languette 64 et de l'épaisseur $e_{66z}$ selon la direction du vecteur Z de l'entretoise 66 :

$$e_{64z} + e_{66z} < e_{52z} < 0{,}1 * (e_{64z} + e_{66z})$$

L'entretoise 66 peut être fixée à la languette 64 au moyen d'un assemblage boulonné 68.

Comme cela est notamment visible sur la figure 6, chaque rainure 52 comprend, au niveau de son extrémité 54, une encoche verticale 70. L'encoche 70 s'étend verticalement vers le bas depuis le bord 58 de la rainure 52. Grâce à l'encoche 70, la poutre 62 peut facilement être insérées dans les rainures 52 lorsque le dispositif de réception 4 est mis en place.

Bien entendu, on ne sort pas du cadre de l'invention en déplaçant l'encoche 70 au niveau de l'extrémité 56 de la rainure 52. De même, on ne sort pas du cadre de l'invention en envisageant deux encoches 70 identiques au niveau des extrémités 54 et 56 respectives de la rainure 52.

De cette manière, la poutre 62 constitue une paroi de fond mobile du dispositif de réception 4. Pour régler la position de la poutre 62, on desserre l'assemblage boulonné 68 associé aux entretoises 66, on sort l'entretoise 66 de la rainure 52, on soulève la poutre 62 suffisamment pour la sortir du cran 46 dans lequel elle est située, on déplace la poutre 62 selon la direction du vecteur X, on insère la poutre 62 dans un autre cran 46, on remet en place les entretoises 66 dans les rainures 52 et on serre les assemblages boulonnés 68. Ce faisant, la paroi de fond constituée par la poutre 62 a été déplacée selon la direction du vecteur X et le dispositif 4 a été adapté à une dimension particulière de batterie devant être reçue.

Lors de la réception de la batterie de chariot élévateur par le dispositif de réception 4, la plaque 26 améliore le guidage de la batterie. Lorsque le dispositif de permutation fournit une batterie devant être chargée au dispositif de réception 4, l'actionneur du dispositif de permutation repousse la batterie dans la direction du vecteur X et en sens opposé au sens du vecteur X. Ce faisant, une arrête inférieure de la batterie entre en contact avec la portion oblique 30. On évite ainsi un contact frontal entre une arrête ou un sommet de la batterie et une pièce du dispositif de réception 4. En particulier, on évite d'abîmer le rouleau 22 le plus proche de la poutre 13.

## Revendications

1.  Dispositif de réception (4) d'une batterie de chariot élévateur comprenant une structure (8), une pluralité de rouleaux (22) pivotant par rapport à la structure (8) autour d'axes appartenant à un même plan de référence et parallèles à une direction axiale, le dispositif (4) comprenant une paroi de fond (62) , la paroi de fond étant apte à se déplacer par rapport à la structure (8) selon un mouvement de translation, **caractérisé en ce que** le mouvement de translation de la paroi de fond par rapport à la structure (8) est selon une direction contenue dans le plan de référence.

2.  Dispositif (4) selon la revendication 1, dans lequel le mouvement de translation de la paroi de fond par rapport à la structure (8) est selon une direction perpendiculaire à la direction axiale.

**3.** Dispositif (4) selon la revendication 1 ou 2, dans lequel la structure (8) comprend une première platine (38) perpendiculaire à la direction axiale, la première platine (38) comprenant une première portion crantée (44), la paroi de butée comprenant une poutre (62).

**4.** Dispositif (4) selon la revendication 3, dans lequel la poutre (62) présente une section longitudinale rectangulaire.

**5.** Dispositif (4) selon la revendication 3, dans lequel la poutre (62) présente une section longitudinale carrée.

**6.** Dispositif (4) selon l'une quelconque des revendications 3 à 5, dans lequel la première portion crantée (44) comprend entre 4 et 8 crans (46).

**7.** Dispositif (4) selon l'une quelconque des revendications 3 à 6, dans lequel la structure (8) comprend une paroi fixe (48, 50) dotée d'une rainure (52) traversante, rectiligne et perpendiculaire à la direction axiale, la rainure (52) comprenant un bord inférieur (58) longitudinal et un bord supérieur (60) longitudinal, le décalage vertical du bord inférieur (58) par rapport à la première portion crantée (44) étant tel que le déplacement de la poutre (62) est verrouillé par la première portion crantée (44) lorsque la poutre (62) est en contact avec le bord inférieur (58).

**8.** Dispositif (4) selon la revendication 7, comprenant une entretoise (66) apte à être intercalée entre la poutre (62) et le bord supérieur (60).

**9.** Dispositif (4) selon la revendication 7 ou 8, dans lequel la rainure (52) comprend une encoche (70) rectiligne et perpendiculaire à la rainure (52), l'encoche (70) étant située à l'une (54) des extrémités de la rainure (52).

**10.** Dispositif (4) selon la revendication 9, dans lequel la rainure (52) comprend une encoche supplémentaire (70) située à l'autre (56) des extrémités de la rainure (52).

**11.** Dispositif (4) selon l'une quelconque des revendications 3 à 10, dans lequel la structure (8) comprend une deuxième platine (40) parallèle à la première platine (38), la deuxième platine (40) comprenant une deuxième portion crantée (44) en regard de la première portion crantée (44).

**12.** Dispositif (4) selon la revendication 11, dans lequel la pluralité de rouleaux (22) forme au moins un premier alignement (18) et un deuxième alignement (20), la structure (8) comprenant une troisième platine (42) parallèle aux première et deuxième platines (38, 40), la troisième platine (42) comprenant une troisième portion crantée (44) en regard des première et deuxième portions crantées (44), le premier alignement (18) étant axialement situé entre la première platine (38) et la deuxième platine (40), le deuxième alignement (20) étant axialement situé entre la deuxième platine (40) et la troisième platine (42).

**13.** Dispositif (4) selon l'une quelconque des revendications 1 à 12, comprenant une plaque de guidage (26) d'une batterie de chariot élévateur, la plaque de guidage (26) étant dotée d'une portion plane (30) inclinée par rapport au plan de référence.

**14.** Dispositif (4) selon la revendication 13 dans lequel la portion plane (30) comprend une extrémité distale (34) par rapport à la pluralité de rouleaux (22) et une extrémité proximale (36) par rapport à la pluralité de rouleaux (22), l'extrémité proximale (36) étant située entre un plan d'appui et le plan de référence, le plan d'appui contenant des zones (24) des rouleaux (22) destinées à être en contact avec une batterie de chariot élévateur, la distance entre l'extrémité proximale (36) et le plan de référence étant de préférence égale au produit de la distance entre le plan de référence et le plan d'appui et d'un coefficient compris entre 0,5 et 0,9.

**15.** Dispositif (4) selon la revendication 13 ou 14, dans lequel la portion plane (30) forme un angle ($\alpha$) entre 20° et 30° avec le plan de référence.

**Patentansprüche**

**1.** Aufnahmevorrichtung (4) für eine Batterie eines Gabelstaplers, umfassend eine Struktur (8), eine Vielzahl von Rollen (22), die sich in Bezug auf die Struktur (8) um Achsen drehen, die einer selben Bezugsebene angehören, und parallel zu einer axialen Richtung sind, wobei die Vorrichtung (4) eine Bodenwand (62) umfasst, wobei die Bodenwand imstande ist, sich in Bezug auf die Struktur (8) gemäß einer Translationsbewegung zu verschieben, **dadurch**

**gekennzeichnet, dass** die Translationsbewegung der Bodenwand in Bezug auf die Struktur (8) in einer Richtung erfolgt, die in der Bezugsebene enthalten ist.

2. Vorrichtung (4) nach Anspruch 1, wobei die Translationsbewegung der Bodenwand in Bezug auf die Struktur (8) in einer Richtung senkrecht zur axialen Richtung erfolgt.

3. Vorrichtung (4) nach Anspruch 1 oder 2, wobei die Struktur (8) eine erste Platine (38) senkrecht zur axialen Richtung umfasst, wobei die erste Platine (38) einen ersten gezackten Abschnitt (44) umfasst, wobei die Anschlagwand einen Träger (62) umfasst.

4. Vorrichtung (4) nach Anspruch 3, wobei der Träger (62) einen rechteckigen Längsschnitt aufweist.

5. Vorrichtung (4) nach Anspruch 3, wobei der Träger (62) einen quadratischen Längsschnitt aufweist.

6. Vorrichtung (4) nach einem der Ansprüche 3 bis 5, wobei der erste gezackte Abschnitt (44) zwischen 4 und 8 Zacken (46) umfasst.

7. Vorrichtung (4) nach einem der Ansprüche 3 bis 6, wobei die Struktur (8) eine feststehende Wand (48, 50) umfasst, die mit einer durchgehenden, geradlinigen und zur axialen Richtung senkrechten Nut (52) versehen ist, wobei die Nut (52) einen unteren Längsrand (58) und einen oberen Längsrand (60) umfasst, wobei der vertikale Versatz des unteren Randes (58) in Bezug auf den ersten gezackten Abschnitt (44) derart ist, dass die Verschiebung des Trägers (62) durch den ersten gezackten Abschnitt (44) verriegelt ist, wenn der Träger (62) in Kontakt mit dem unteren Rand (58) ist.

8. Vorrichtung (4) nach Anspruch 7, umfassend ein Distanzstück (66), das imstande ist, zwischen den Träger (62) und den oberen Rand (60) eingesetzt zu werden.

9. Vorrichtung (4) nach Anspruch 7 oder 8, wobei die Nut (52) eine geradlinige, und zur Nut (52) senkrechte Einkerbung (70) umfasst, wobei sich die Einkerbung (70) an einem (54) der Enden der Nut (52) befindet.

10. Vorrichtung (4) nach Anspruch 9, wobei die Nut (52) eine zusätzliche Einkerbung (70) umfasst, die sich an dem anderen (56) der Enden der Nut (52) befindet.

11. Vorrichtung (4) nach einem der Ansprüche 3 bis 10, wobei die Struktur (8) eine zweite Platine (40) parallel zur ersten Platine (38) umfasst, wobei die zweite Platine (40) einen zweiten gezackten Abschnitt (44) auf Höhe des ersten gezackten Abschnitts (44) umfasst.

12. Vorrichtung (4) nach Anspruch 11, wobei die Vielzahl von Rollen (22) mindestens eine erste Aneinanderreihung (18) und eine zweite Aneinanderreihung (20) bildet, wobei die Struktur (8) eine dritte Platine (42) parallel zur ersten und zweiten Platine (38, 40) umfasst, wobei die dritte Platine (42) einen dritten gezackten Abschnitt (44) auf Höhe des ersten und zweiten gezackten Abschnitts (44) umfasst, wobei sich die erste Aneinanderreihung (18) axial zwischen der ersten Platine (38) und der zweiten Platine (40) befindet, wobei sich die zweite Aneinanderreihung (20) axial zwischen der zweiten Platine (40) und der dritten Platine (42) befindet.

13. Vorrichtung (4) nach einem der Ansprüche 1 bis 12, umfassend eine Führungsplatte (26) einer Gabelstaplerbatterie, wobei die Führungsplatte (26) mit einem ebenen Abschnitt (30) versehen ist, der in Bezug auf die Bezugsebene geneigt ist.

14. Vorrichtung (4) nach Anspruch 13, wobei der ebene Abschnitt (30) ein distales Ende (34) in Bezug auf die Vielzahl von Rollen (22), und ein proximales Ende (36) in Bezug auf die Vielzahl von Rollen (22) umfasst, wobei sich das proximale Ende (36) zwischen einer Auflageebene und der Bezugsebene befindet, wobei die Auflageebene Bereiche (24) der Rollen (22) enthält, die dazu bestimmt sind, in Kontakt mit einer Gabelstaplerbatterie zu sein, wobei die Entfernung zwischen dem proximalen Ende (36) und der Bezugsebene vorzugsweise gleich dem Produkt der Entfernung zwischen der Bezugsebene und der Auflageebene und einem Koeffizienten ist, der zwischen 0,5 und 0,9 liegt.

15. Vorrichtung (4) nach Anspruch 13 oder 14, wobei der ebene Abschnitt (30) einen Winkel ($\alpha$) zwischen 20° und 30° mit der Bezugsebene bildet.

**Claims**

1.  A device (4) for receiving a forklift truck battery comprising a structure (8), a plurality of rolls (22) pivoting relative to the structure (8) around axes belonging to the same reference plane and parallel to an axial direction, the device (4) comprising a bottom wall (62), the bottom wall being capable of moving relative to the structure (8) according to a translational movement, **characterised in that** the translational movement of the bottom wall relative to the structure (8) is done according to a direction contained in the reference plane.

2.  The device (4) according to claim 1, wherein the translational movement of the bottom wall relative to the structure (8) is done according to a direction perpendicular to the axial direction.

3.  The device (4) according to claim 1 or 2, wherein the structure (8) comprises a first plate (38) perpendicular to the axial direction, the first plate (38) comprising a first notched portion (44), the stop wall comprising a beam (62).

4.  The device (4) according to claim 3, wherein the beam (62) has a rectangular longitudinal section.

5.  The device (4) according to claim 3, wherein the beam (62) has a square longitudinal section.

6.  The device (4) according to any one of claims 3 to 5, wherein the first notched portion (44) comprises between 4 and 8 notches (46).

7.  The device (4) according to any one of claims 3 to 6, wherein the structure (8) comprises a fixed wall (48, 50) provided with a through groove (52), rectilinear and perpendicular to the axial direction, the groove (52) comprising a longitudinal lower edge (58) and a longitudinal upper edge (60), the vertical offset of the lower edge (58) with respect to the first notched portion (44) being such that the movement of the beam (62) is locked by the first notched portion (44) when the beam (62) is in contact with the lower edge (58).

8.  The device (4) according to claim 7, comprising a spacer (66) able to be interposed between the beam (62) and the upper edge (60).

9.  The device (4) according to claim 7 or 8, wherein the groove (52) comprises a notch (70) rectilinear and perpendicular to the groove (52), the notch (70) being located at one (54) of the ends of the groove (52).

10. The device (4) according to claim 9, wherein the groove (52) comprises an additional notch (70) located at the other one (56) of the ends of the groove (52).

11. The device (4) according to any one of claims 3 to 10, wherein the structure (8) comprises a second plate (40) parallel to the first plate (38), the second plate (40) comprising a second notched portion (44) facing the first notched portion (44).

12. The device (4) according to claim 11, wherein the plurality of rolls (22) forms at least one first alignment (18) and one second alignment (20), the structure (8) comprising a third plate (42) parallel to the first and second plates (38, 40), the third plate (42) comprising a third notched portion (44) facing the first and second notched portions (44), the first alignment (18) being axially located between the first plate (38) and the second plate (40), the second alignment (20) being axially located between the second plate (40) and the third plate (42).

13. The device (4) according to any one of claims 1 to 12, comprising a guide plate (26) of a forklift truck battery, the guide plate (26) being provided with a planar portion (30) inclined with respect to the reference plane.

14. The device (4) according to claim 13, wherein the planar portion (30) comprises a distal end (34) with respect to the plurality of rolls (22) and a proximal end (36) with respect to the plurality of rolls (22), the proximal end (36) being located between a support plane and the reference plane, the support plane containing areas (24) of the rolls (22) intended to be in contact with a forklift truck battery, the distance between the proximal end (36) and the reference plane being preferably equal to the product of the distance between the reference plane and the support plane and a coefficient comprised between 0.5 and 0.9.

15. The device (4) according to claim 13 or 14, wherein the planar portion (30) forms an angle (a) between 20° and 30° with the reference plane.

## FIG.1

EP 3 800 693 B1

# FIG.2

# FIG.3

# FIG.4

# FIG.5

# FIG.6

**EP 3 800 693 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2014073885 B
- KR 101078580